# EUROPEAN PATENT APPLICATION

(11) **EP 0 573 104 A2**
(43) Date of publication of application: **08.12.1993**
(21) Application number: 93201507.6
(22) Date of filing: 26.05.1993
(51) Int. Cl.: H04N 3/233

(54) **Display device including a correction circuit for correcting pictures to be displayed, and correction circuit for use in a display device**

(30) Priority: 02.06.1992 EP 92201578
(71) Applicant: Philips Electronics N.V., 5621 BA Eindhoven (NL)
(72) Inventor: Van Gurp, Wilhelmus Adrianus J., NL-5656 AA Eindhoven (NL); Van Gestel, Henricus Antonius W., NL-5656 AA Eindhoven (NL)
(74) Representative: Kooiman, Josephus Johannes Antonius

(57) **Abstract**

Display device comprising a display tube with a display screen and a video signal processing circuit. The video signal processing circuit has a memory which is controlled by two clock signals, a write clock and a read clock. The display device further comprises a clock oscillator and a correction circuit for correcting the video signal to be displayed for geometry errors, east-west distortion and the like. The correction circuit comprises a converter circuit and a multiplex circuit for converting the clock signal generated by the clock oscillator into a second clock signal having a variable frequency. This provides the possibility of correcting the picture to be displayed for any possible error, while only one clock oscillator is present.

## Description

The invention relates to a display device comprising a display tube with a display screen for displaying a picture, a video signal processing circuit for receiving and processing a video signal and for applying the processed video signal to the display tube, said video signal processing circuit having a memory for storing the video signal, said memory being controlled by at least two clock signals, a write clock and a read clock, a clock oscillator for generating a first clock signal and a correction circuit for generating the second clock signal at a variable frequency.

A display device of this type is known from United States Patent US-A-4,689,526. This Patent describes a correction circuit for correcting geometry errors in the display of pictures on a display screen of a display tube, in which correction coils are not used. The sawtooth-shaped deflection signals (applied to deflection coils) originating from oscillators for the horizontal and vertical deflection are left uncorrected. The instant when elements of the digital video signal are applied to the display tube is corrected for each picture line in dependence upon the relevant position of the spot on the display screen.

A drawback of this known display device is that the correction circuit comprises a frequency divider and/or a frequency multiplier or an interpolator for correcting the video signal to be displayed. As is known, these afore-mentioned elements of the correction circuit are complicated, inaccurate and expensive.

A further drawback of the known display device is that the correction can only be realised for a digitized video signal.

It is, *inter alia* an object of the invention to provide a display device which does not have the above-mentioned drawbacks and can be used more universally. To this end the display device according to the invention is characterized in that the correction circuit comprises a converter circuit for converting the first clock signal into a predetermined number of signals having different phases, and a multiplex circuit adapted to receive the predetermined number of signals at an equally large number of inputs and to generate the second clock signal of the variable frequency under the control of a control circuit.

By generating the second clock signal from the first clock signal in this way, two clock signals having a mutually discrete phase are obtained in a simple manner. This is one of the great advantages of this display device as compared with known display devices. In applications in which two clock oscillators are used on one integrated circuit, the clock signals generated by these clock oscillators will affect each other (crosstalk, *etc*.). While starting from the first clock signal, the second clock signal is generated from signals having a fixed phase difference with respect to the first clock signal, these clock signals cannot affect each other.

An embodiment of a display device according to the invention is characterized in that the converter circuit comprises a delay circuit for delaying the received first clock signal and for supplying the predetermined number of signals at differently delayed phases.

The delay circuit forms a plurality of signals from the input signal, which signals have a phase which is different from that of the first clock signal.

A further embodiment of a display device according to the invention is characterized in that the phase difference of the signals generated by the converter circuit is evenly distributed over the period of the first clock signal.

By distributing the signals generated in the converter circuit evenly over the period of the first clock signal, it is simple to obtain a smooth second clock signal by means of the multiplex circuit without having to control the multiplex circuit in a complicated manner.

A further embodiment of a display device according to the invention is characterized in that the control circuit controls the multiplex circuit under the control of a programme-control clock, which programme-control clock determines the switching instants of the multiplex circuit.

The programme-control clock may be, for example synchronized with the incoming synchronizing signals so as to ensure that the video signal and the deflection signals are always synchronized.

These and other aspects of the invention will be apparent from and elucidated with reference to the embodiments described hereinafter. In the drawing
Fig. 1 shows an embodiment of a display device according to the invention.
Fig. 2 shows the signals generated in the correction circuit.

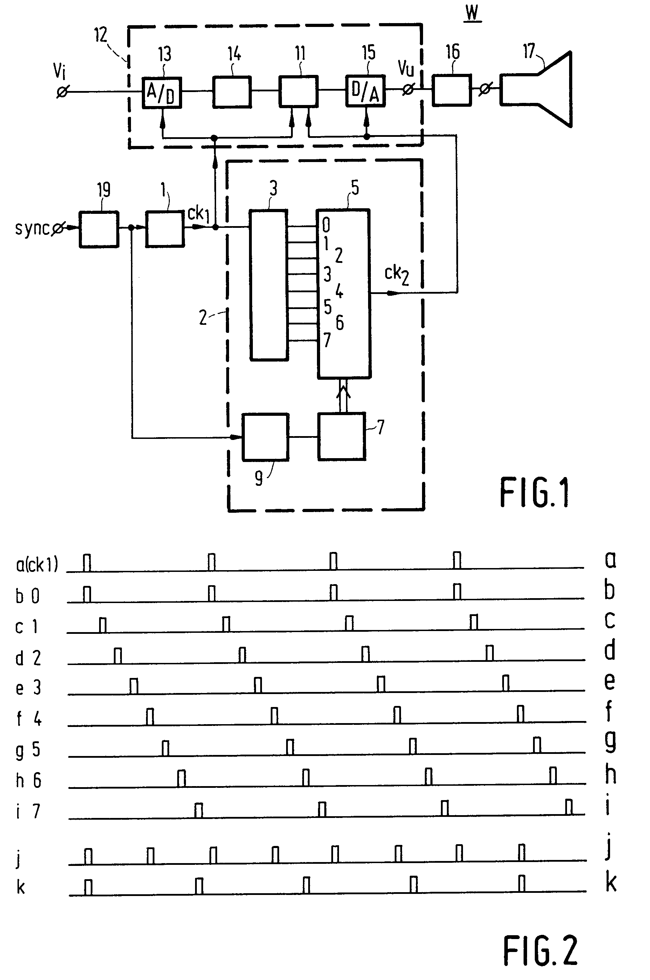

Fig. 1 shows an embodiment of a display device, with a video signal Vi received at an input terminal, which video signal is applied to a video signal processing circuit 12. The video signal processing circuit comprises an A/D converter 13 for digitizing the video signal. After processing in a signal processing stage 14, this digitized video signal is applied to a memory 11. The display device receives synchronizing signals at a second input, which signals are applied to a synchronizing processing stage 19. The synchronizing processing stage supplies a control signal from an output, which signal is applied to a clock oscillator 1 and to a programme-control clock 9. Under the control of a first clock signal, a write clock signal, Ck1, the processed, digitized video signal is written into the memory 11 and subsequently read under the control of a second clock signal, a read clock signal, Ck2. The first clock signal is generated in a clock oscillator 1 which also controls the A/D converter 13. Starting from the first clock signal, the second clock signal is generated in a correction circuit 2. The second clock signal also controls a D/A converter 15 which converts the video signal read from the memory 11 into an analog signal Vu. This analog signal is applied to a display tube 17 *via* an output stage 16.

The A/D converter 13, the signal processing stage 14, the memory 11 and the D/A converter 15 are parts of the video signal processing circuit 12.

The correction circuit 2 will now be described in greater detail. An input of the correction circuit receives the first clock signal Ck1. This clock signal is applied to a delay circuit 3. The delay circuit forms an input clock signal, for example to an n-phase output clock, *i.e*. n clock signals having a phase difference (delay) varying between 0 and (n-1)/n*360° with respect to the input clock. In this embodiment, n = 8. Consequently, the delay circuit has eight outputs each being connected to an input of a multiplex circuit 5. The multiplex circuit multiplexes the eight input signals (clock signals) to form one output signal (the second clock signal Ck2) under the control of a control circuit 7. The control circuit determines the order and the number of times when a given input signal is supplied from the output. This provides the possibility of giving the output signal, *i.e*. the second clock signal Ck2, any desired variation, provided that the desired variation is stored in the control circuit 7. It is, for example, possible to use a look-up table, with the required variation being stored in the look-up table for each picture line of the pictures to be displayed. The variation of the read clock (or of the write clock) may be necessary, for example, to correct the EW (east-west) distortion.

Fig. 2 shows the clock signals generated in the correction circuit 2. Fig. 2a shows the first clock signal Ck1. Figs. 2b-2i show the different clock signals generated in the delay circuit 3 and applied to the multiplex circuit 5. An input 0 of the multiplex circuit receives a clock signal having the same phase as the first clock signal Ck1. Inputs 1 ... 7 of the multiplex circuit receive a signal having a phase difference of 1/8*360° ... 7/8*360° with respect to the clock signal Ck1 (see Figs. 2c-2i). By generating an output signal with reference to the signals as shown in Figs. 2b-2i, which output signal is a combination of these input signals, the clock signal Ck2 may be given any desired variation with which the video signal to be displayed is corrected for, for example, horizontal geometry errors. The larger n is chosen, the more accurate the clock signal Ck2 can be generated with the desired variation.

Figs. 2j and 2k show two examples of clock signals Ck2 generated by means of the correction circuit 2.

If it is necessary, for example, to have temporarily a clock frequency which is twice as high (extreme situation), this can be realised by arranging the multiplex circuit 5 between input 0 (signal shown in Fig. 2b) and input 4 (signal shown in Fig. 2f); see Fig. 2j for the resultant second clock signal.

If it is necessary, for example, to obtain a clock frequency which is 8/7 times the input clock frequency (Ck1), the multiplex circuit should be arranged between input 0, 7, 6, 5, 4, 3, 2, 1, 0, *etc* (see Fig. 2k for the resultant second clock signal, partly shown). Here the clock signals are shown for a small part of a field, *i.e*. for a part of a picture line. To realise, for example the geometry corrections, the line frequency per line to be displayed should be adapted (so as to prevent, for example pincushion distortion). In some cases it may also be necessary to vary the line frequency also during one line, for example in the case of scanning rate modulation in which, for example the definition of a picture is improved by adapting the scanning rate in the case of an intensity variation of the picture to be displayed. To be capable of doing this, the control of the multiplex circuit will have to be rapid enough.

The control circuit 7 is controlled by a programme-control clock 9 which determines at which instant the control circuit is to apply a subsequent control signal to the multiplex circuit 5. In this example the programme-control clock itself is controlled by the synchronization processing stage 19. In most cases it will be necessary that the programme-control clock is synchronized with the incoming synchronizing signals. However, if the synchronizing signals of the incoming video signal are not subject to variations and if the synchronizing signals are known in advance (for example, in computer monitors or CD-I apparatuses), the coupling of the programme-control clock with the incoming synchronizing signals is not necessary. The control circuit may also be controlled in various different manners. For example, the programme-control clock 9 shown in Fig. 1 may be replaced by a circuit receiving an analog voltage at an input and generating a signal with reference to the supplied (analog) voltage, which signal is applied to the control circuit 7 (referred to as "real time program sequencer").

The control circuit 7 controls the multiplex circuit 5 *via* a "bus", which bus conveys the address (in this example 0 ... 7) of the next input which is to be coupled to the output and, for example a timing signal.

In this embodiment the delay circuit supplies clock signals having equal phase differences. This is not essential and it is alternatively possible for the delay circuit 3 to supply clock signals which are not evenly distributed over the period of the clock signal Ck1. However, if the clock signal Ck2 at the output of the correction circuit is to have a smooth variation, the control from the control circuit will become more complicated.

It is also possible to combine the delay circuit 3 and the clock oscillator 1 to a ring oscillator, with the first clock signal as the input signal and also as the first output signal, and with the predetermined number of signals having different phase differences with respect to the first clock signal being applied to further outputs. The delay circuit may alternatively be a cyclic clock buffer.

The two clock signals Ck1 (from the clock oscillator 1) and Ck2 (from the correction circuit 2) are applied to the memory 11. In this embodiment the first clock signal Ck1 is the write clock signal and the second clock signal Ck2 is the read clock signal. However, if desired, the two clock signals can be interchanged.

Due to the use of this clock modulation, the output video signal Vu can be corrected with respect to time for any possible distortion such as, for example geometry, while scanning rate modulation is also possible.

The embodiment shown in Fig. 1 relates to an example in which the video signal is digitized. However, it is alternatively possible to use the correction circuit in an embodiment in which the video signal is written into an analog memory, for example *via* a sample-and-hold circuit. It does not make any difference for the invention whether the video signal processing circuit operates in an analog or a digital manner.

It is alternatively possible to realise a coarse correction of the horizontal geometry by adapting the sawtooth-shaped (or sine-shaped) deflection signals (to be modulated by means of the generally known horizontal and vertical parabolas) and to realise only the fine correction by means of the correction circuit described above. The correction circuit then only needs to perform a small correction, which can be realised in a very accurate manner.

The correction circuit may also be suitable for other applications in which it is necessary to have two clock signals which do not affect each other and have a predetermined variation with respect to each other. For example, this correction circuit may also be used in CD-I apparatuses, video recorders and (television) cameras.

## Claims

1. A display device comprising a display tube with a display screen for displaying a picture, a video signal processing circuit for receiving and processing a video signal and for applying the processed video signal to the display tube, said video signal processing circuit having a memory for storing the video signal, said memory being controlled by at least two clock signals, a write clock and a read clock, a clock oscillator for generating a first clock signal and a correction circuit for generating the second clock signal at a variable frequency, characterized in that the correction circuit comprises a converter circuit for converting the first clock signal into a predetermined number of signals having different phases, and a multiplex circuit adapted to receive the predetermined number of signals at an equally large number of inputs and to generate the second clock signal of the variable frequency under the control of a control circuit.

2. A display device as claimed in Claim 1, characterized in that the converter circuit comprises a delay circuit for delaying the received first clock signal and for supplying the predetermined number of signals at differently delayed phases.

3. A display device as claimed in Claim 1 or 2, characterized in that the converter circuit comprises a ring oscillator for delaying the received first clock signal and for supplying the predetermined number of signals at differently delayed phases.

4. A display device as claimed in Claim 1, 2 or 3, characterized in that the phase difference of the signals generated by the converter circuit is evenly distributed over the period of the first clock signal.

5. A display device as claimed in Claim 1, characterized in that the correction circuit comprises a control circuit adapted to control the multiplex circuit.

6. A display device as claimed in Claim 5, characterized in that the control circuit controls the multiplex circuit under the control of a programme-control clock, which programme-control clock determines the switching instants of the multiplex circuit.

7. A correction circuit for use in a display device as claimed in Claim 1, 2, 3, 4, 5 or 6.
